# EUROPÄISCHE PATENTSCHRIFT

(11) **EP 4 247 613 B1**
(45) Veröffentlichungstag und Bekanntmachung des Hinweises auf die Patenterteilung: **03.07.2024**
(21) Anmeldenummer: 21834713.6
(22) Anmeldetag: 16.11.2021
(51) Int. Cl.: B29C 48/25, B29C 48/44, B29C 48/435

(54) **STÜTZLAGERELEMENT FÜR EINE EXTRUDERSCHNECKE FÜR EINEN MEHRSCHNECKENEXTRUDER**
SUPPORT BEARING ELEMENT FOR AN EXTRUDER SCREW FOR A MULTI-SCREW EXTRUDER
ÉLÉMENT DE PALIER DE SUPPORT POUR UNE VIS D'EXTRUSION DESTINÉE À UNE EXTRUDEUSE MULTI-VIS

(30) Priorität: 17.11.2020 DE 102020130368; 16.09.2021 DE 102021124034
(43) Veröffentlichungstag der Anmeldung: 27.09.2023
(73) Patentinhaber: Gneuss GmbH, 32549 Bad Oeynhausen (DE)
(72) Erfinder: GNEUSS, Daniel, Charlotte, NC 28277 (US); GNEUSS, Detlef, 6919 Carabietta (CH); GNEUSS, Stephan, 32547 Bad Oeynhausen (DE)
(74) Vertreter: Tarvenkorn, Oliver
(86) Internationale Anmeldenummer: PCT/DE2021/100911
(87) Internationale Veröffentlichungsnummer: WO 2022/105964

(56) Entgegenhaltungen:
- CN-Y- 201 086 389
- DE-A1-102017 111 275
- DE-A1-102018 130 102
- DE-B3-102013 003 380

## Beschreibung

Die Erfindung betrifft ein Stützlagerelement für eine Extruderschnecke für einen Mehrschneckenextruder mit den Merkmalen des Oberbegriffs des Anspruchs 1.

Für die Aufbereitung von Kunststoffschmelze, insbesondere Polyester, hat sich ein Multirotationssystem (MRS) bewährt, das in WO 2003 033 240 A1 grundlegend beschrieben ist. Es enthält eine Extruderschnecke, die zwischen einer Eintragszone zum Einziehen und Aufschmelzen des Kunststoffs und einer Austragszone eine sogenannte Polyrotationseinheit mit einer Rotorkörperwelle umfasst. Letztere besitzt einen Rotorkörper mit einem gegenüber den anderen Zonen deutlich vergrößerten Durchmesser und außerdem mehrere darin gelagerte, rotierende Satellitenschnecken. Mit dem Multirotationssystem wird eine signifikante Erhöhung der Entgasungsleistung gegenüber Ein- und Doppelschneckensystem erreicht. Folglich kann die Verweilzeit der Schmelze in der Polyrotationseinheit sehr kurzgehalten werden.

Das bekannte Antriebskonzept sieht eine Antriebszone für die Satellitenschnecken vor, die innerhalb des für die Entgasung vorgesehenen Behandlungsraums liegt. Die Anordnung der Antriebszone direkt am stromaufwärts gelegenen Ende der Multirotationseinheit ist in den meisten Anwendungsfällen notwendig und kann nicht an das stromabwärts gelegene Ende verlagert werden, damit die Länge desjenigen Abschnitts der Extruderschnecke, die durch das Antriebsdrehmoment belastet wird, kurzgehalten wird.

Die aus der Meteringzone über den Konus überführte Schmelze wird durch die Antriebszone der Satellitenschnecken hindurchgeführt. In einigen Anwendungsfällen kann der über die dort auftretende Scherung erfolgende Energieeintrag vorteilhaft sein, weil er die Homogenisierung der Kunststoffschmelze begünstigt. Andererseits kann die Scherung des Polymers in der Antriebszone nachteilig für die Produkteigenschaften sein. Die Scherung bewirkt eine Temperaturerhöhung, die ggf. durch Maßnahmen zur Kühlung kompensiert werden und die ohnehin stark belasteten Werkstoffe in der Antriebszone.

Die Antriebszone der Satellitenschnecken ist in verschiedener Hinsicht hoch belastet. Die Verzahnung, bestehend aus den jeweils an den Satellitenschnecken angebrachten Antriebsritzeln und einem gehäuseseitigen Zahnring mit Innenverzahnung kann nur durch das heiße Polymer geschmiert werden. Daher ist es notwendig, dass das Polymer die Antriebszone durchströmt. Dadurch gelangen aber auch in der Meteringzone nicht vollständig aufgeschmolzene, harte Kunststoffpartikel in die Antriebszone. Beim Recycling von Kunststoffen können zudem Störstoffe wie Metallpartikel oder Sandkörner in der Kunststoffschmelze enthalten sein. Zudem führt der Schmelzedruck der am Außenumfang der Extruderschnecke strömenden Schmelze dazu, dass die Antriebsritzel der schwimmend gelagerten Satellitenschnecken in die Aufnahmenuten am Stützlagerelementelement gepresst werden und die Zahnflanken dort starken Verschleiß hervorrufen und auch selbst starkem Verschleiß unterliegen.

DE102018130102 A1 beschreibt einen Mehrschneckenextruder mit einer Extruderschnecke, die einen Einzugs- und Meteringabschnitt und einen im Durchmesser demgegenüber vergrößerten Rotorkörper, auf, in dem mehrere Satellitenschnecken drehbar gelagert sind. Dazwischen ist ein Konus ausgebildet. Die Satellitenschnecken weisen einen Schneckensteg auf und sind offen liegend am Außenumfang des Rotorkörpers angeordnet. In einer Antriebszone besitzen die Satellitenschnecken jeweils ein Antriebsritzel, um in eine Innenverzahnung in oder an der Innenwandung eines Extrudergehäuses des Mehrschneckenextruders einzugreifen. Die Antriebszone ist starkem Verschleiß unterworfen, insbesondere weil die Satellitenschnecken schwimmend gelagert sind und daher je nach den gegebenen Strömungs- und Druckverhältnissen exzentrisch in der zugeordneten Nut im Rotorkörper rotieren.

Der in DE102017111275 A1 gezeigte Mehrschneckenextruder ist ähnlich aufgebaut wie der zuvor genannte, wobei zwischen dem Konus und der Antriebszone zusätzlich ein nach außen geschlossener Abschnitt an der Extruderschnecke vorgesehen ist. Am Konus sind Bohrungen vorgesehen, um Teile der Schmelzeströmung direkt in die Antriebszone zu leiten und dadurch die Schmierung mit Polymerschmelze zu gewährleisten. Auch bei dieser Ausführungsform sind die antriebsseitigen Enden der Satellitenschnecken schwimmend gelagert.

DE102013003380 B3 beschreibt einen weiteren Typ eines Mehrschneckenextruders mit einer Multirotationseinheit mit mehreren Satellitenschnecken. Hierbei ist eine schwimmende Lagerung der Satellitenschnecken in einem Stützlagerelement vorgesehen, welches von der Extruderschnecke abgenommen werden kann, so dass es im Verschleißfall besser ersetzbar ist.

Der in CN 201086389 Y offenbarte Mehrschneckenextruder sieht eine Rotationseinheit mit mehreren Satellitenschnecken vor. Er ist jedoch nur zur Verarbeitung bereits vorplastifizierter Polymerschmelze geeignet, da keine Extruderschnecke mit einer Einzug- und Meteringzone vorgesehen ist. Die Satellitenschnecken sind außerhalb einer Mittelachse der Rotationseinheit angeordnet und liegen am gesamten Umfang offen. Der Mehrschneckenextruder ist in verfahrenstechnischer Hinsicht nicht für die gleichen Anwendungsfälle nutzbar, für die die oben genannten Mehrschneckenextruder konzipiert sind.

Die Aufgabe der Erfindung besteht somit darin, eine Extruderschnecke für ein MRS-System bzw. einen damit ausgerüsteten Mehrschneckenextruder so zu verbessern, dass der Verschleiß in der Antriebszone der Satellitenschnecken reduziert wird.

Die Lösung nach der vorliegenden Erfindung besteht in einem Stützlagerelement für eine Extruderschnecke, die Teil einer Extruderschnecke mit den Merkmalen des Anspruchs 6 sein kann, welche wiederum Teil eines Mehrschneckenextruders mit den Merkmalen des Anspruchs 10 sein kann.

Nach der Erfindung ist vorgesehen, die Satellitenschnecken in ihren Nuten im Stützlagerelement mindestens an einer Seite neben dem Antriebsritzel über ein Gleitlager definiert abzustützen, um dem Schmelzedruck entgegenzuwirken und um zu verhindern, dass das Antriebsritzel mit den Außenflanken seiner Verzahnung über den Grund der Nut schabt. Damit verlässt die Erfindung das bisher bekannte Konzept eines rein im Polymer schwimmenden Antriebsabschnitts der Satellitenschnecke.

Im Sinne der Erfindung kann vorgesehen sein, das Ende der Satellitenschnecke als Lagerabsatz auszubilden, der in einer Lagerausnehmung am Stützlagerelement gelagert ist. Die Lagerausnehmung befindet sich bei dieser Ausführungsform direkt hinter dem Konus, der den Übergang zwischen Meteringzone und Entgasungszone darstellt. In diesem Fall wird direkt durch den Lagerabsatz an der Satellitenschnecke und die zugehörige Lagerausnehmung ein Gleitlager gebildet.

Um Toleranzen ausgleichen zu können, die gerade auch infolge der Erwärmung bzw. Abkühlung der Extruderschnecke im Betrieb auftreten, kann vorgesehen sein, die Lagerabsätze nicht direkt in die jeweilige Lagerausnehmung einzusetzen, sondern in einem zusätzlich dort eingesetzten Lagereinsatzelement zu lagern, so dass das Gleitlager zwischen dem Lagereinsatzelement und dem Lagerabsatz an der Satellitenschnecke oder zwischen dem Lagereinsatzelement und der Lagerausnehmung ausgebildet wird.

Nach einer bevorzugten Ausführungsform ist die Satellitenschnecke beidseitig neben dem Antriebsritzel in Gleitlagern abgestützt. Neben dem endseitigen Lager ist ein weiterer Lagerabsatz zwischen dem Bereich der Schnecke, der einen Schneckensteg besitzt, und dem Bereich zur Aufnahme des Antriebsritzels ausgebildet.

Besonders bevorzugt werden die Lagerbohrungen des endseitigen Lagers wie auch des ggf. vorhandenen zweiten Lagers auf der anderen axialen Seite des Antriebsritzels jeweils in einem separaten Lagereinsatzelement ausgebildet, welches in die Nut am Stützlagerelement eingesetzt ist. Bei dem Lagereinsatzelement entspricht die Außenkontur in großen Teilen der Innenkontur der Aufnahmenut. Da diese bevorzugt tief eingeschnitten ist, ist das Lagereinsatzelement ohne zusätzliche Sicherungselemente in der quer zur Mittelachse ausgerichteten Querschnittsebene formschlüssig in der Nut gehalten und kann mit der Satellitenschnecke zusammen in das Stützlagerelement eingesetzt werden. Eine tief eingeschnittene Nut liegt vor, wenn der Querschnitt der Nut einen Bogen von mehr als 180° abdeckt.

Weiterhin vorzugsweise ist auch das endseitige Lager der Satellitenschnecke durch ein solches Lagereinsatzelement gebildet, das in die Nut eingesetzt wird. Damit sind beide Lagereinsatzelemente bei Verschleiß leicht austauschbar. Für sie kann ein metallischer Werkstoff gewählt werden, der durch HeißIsostatisches Pressen (HIP) nachverdichtet ist, um die Verschleißfestigkeit zu erhöhen. Das Stützlagerelement kann so unabhängig von den Anforderungen an die Festigkeit der Lagerstellen aus anderen geeigneten Werkstoffen gebildet werden.

Nach einer vorteilhaften Ausführungsform wird ein wesentlicher Anteil des Schmelzestroms in der Antriebszone nicht über die Antriebsritzel geführt, sondern in Kanälen innerhalb des Stützlagerelements an den Antriebsritzeln vorbei. Daraus ergibt sich als Vorteil, dass die Schmelze nicht durch Scherung erwärmt wird. Es ist z.B. bei der Verarbeitung von PET vorteilhaft, wenn die Schmelze nicht vollständig durchplastifiziert ist und damit relativ kühl ist, um einebn übermäßigen Abbau der Schmelze schon im Eintragsbereich zu vermeiden. Für die Extruderschnecke selbst ergibt sich als weiterer Vorteil, dass bei Kontaminationen der Schmelze die Gefahr einer Beschädigung reduziert wird.

Für die Wirksamkeit der Umströmungskanäle ist wichtig, dass diese groß genug gewählt werden, damit ein Hauptanteil des Volumenstroms des mit der Extruderschnecke geförderten und behandelten Polymers nicht durch die Antriebszone geleitet wird. Ein ausreichender Querschnitt ist auch wichtig, um zu verhindern, dass nicht vollständig plastifiziertes Material der Eintragsschnecke die Kanäle verstopft und zu einem hohen Druckabfall führt. Beides bewirkt einen hohen Kopfdruck am Ende des Eintrags und damit einen deutlich höheren Energieeintrag und vermeidet so eine Schädigung der Schmelze.

Konkret sollten die Kanäle in jeder Dimension mindestens 5 mm freien Querschnitt bieten, vorzugsweise 8 mm bis 10 mm.

Bevorzugt ist das Stützlagerelement Teil einer Extruderschnecke für einen Mehrschneckenextruder mit den Merkmalen des Anspruchs 6.

Das erfindungsgemäß ausgebildete Stützlagerelement kann Teil eines einstückigen Rotorkörpers sein. Um im Verschleißfall das Stützlagerelement unabhängig vom Rest des Rotorkörpers austauschen oder nacharbeiten zu können ist es jedoch vorteilhaft, wenn Rotorkörper und Stützlagerelement getrennt hergestellte, aber fest verbundene und mit ihren Querschnitten bündig ineinander übergehende Einzelteile sind. Die Nuten zur Aufnahme der Satellitenschnecken gehen somit an beiden Teilen ebenfalls ineinander über, so dass ein zwischen dem Antriebsritzel und dem Beginn des Schneckenstegs angeordnetes Gleitlager sowohl in der Nut am Stützlagerelement wie auch in der im Rotorkörper fortgesetzten Nut angeordnet sein kann.

Die Extruderschnecke kann Teil eines Mehrschneckenextruders mit den Merkmalen des Anspruchs 10 sein.

Vorteilhaft dabei ist insbesondere, wenn Umströmungskanäle außen um die Verzahnung geführt werden, also in die Wandung des Extrudergehäuses und/oder in den Statorring eingebracht werden.

Der Ringspalt zwischen der Außenseite des Stützlagerelements und der Innenseite der Extruderbohrung im Gehäuse sollte eine radiale Weite von vorzugsweise 1 mm bis 3 mm und maximal 5 mm besitzen. Bei einem Durchmesser von 130 mm beispielsweise wird der Ringspalt mit 1,6 mm bis 2,0 mm bemessen.

Dadurch wird vorgegeben, dass nur ein kleiner Volumenstrom über den Außenumfang strömt, damit das Polymer als Schmierstoff in der Antriebszone wirken kann, während sich der größere Anteil des Volumenstroms auf die Umströmungskanäle aufteilt und somit keine Scherung in der Antriebszone erfährt. Es ist außerdem vorteilhaft, wenn die Größe des Ringspalts so klein gewählt wird, da Fremdkörper im Schmelzestrom zurückgehalten werden, die eine solche Größe haben, dass sie zu einer nennenswerten mechanischen Beschädigung der Verzahnung führen kann.

Die Erfindung wird nachfolgend anhand eines Ausführungsbeispiels und mit Bezug auf die Zeichnungen näher erläutert. Die Figuren zeigen im Einzelnen:
- Fig. 1: ein Stützlagerelement mit weiteren Teilen einer Extruderschnecke in perspektivischer Ansicht;
- Fig. 2: eine perspektivische Ansicht auf das Stützlagerelement nach einer ersten Ausführungsform;
- Fig. 3A, 3B: jeweils Teile der Extruderschnecke mit dem Stützlagerelement nach Fig. 2 in perspektivischer Ansicht; und
- Fig. 4: Teile eines Mehrschneckenextruders mit der Extruderschnecke in seitlicher Schnittansicht;
- Fig. 5: eine perspektivische Ansicht auf ein Stützlagerelement nach einer zweiten Ausführungsform;
- Fig. 6: eine perspektivische Ansicht auf die Rückseite des Stützlagerelements nach Figur 5;
- Fig. 7: eine perspektivische Ansicht auf eine Anordnung mehrerer Satellitenschnecken der Extruderschnecke; und
- Fig. 8: eine perspektivische Ansicht auf ein Stützlagerelement nach einer dritten Ausführungsform.

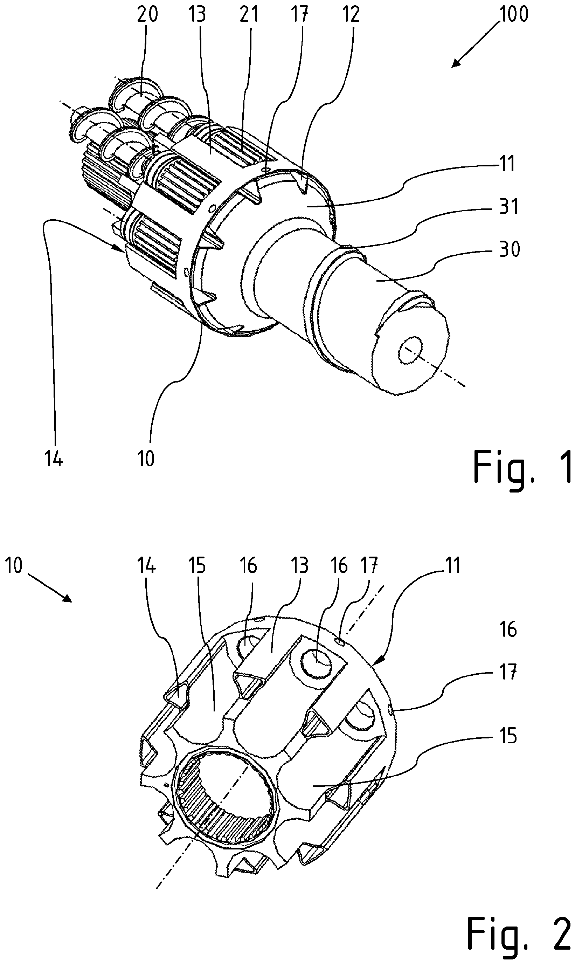

In Figur 1 ist ein Stützlagerelement 10 mit weiteren Teilen einer Extruderschnecke 100 für einen Mehrschneckenextruder perspektivisch dargestellt, und zwar ist dort der Übergangsbereich zwischen einem Einzugs- und Meteringabschnitt 30 mit einem Schneckensteg 31 und einer Multischneckensektion mit mehreren Satellitenschnecken 20 gezeigt. Dazwischen ist ein Konus 11 ausgebildet, so dass sich der Durchmesser der Extruderschnecke 100 in Fließrichtung erweitert. Der Konus 11 ist Teil eines Stützlagerelements 10. In darin eingebrachten Nuten sind die Satellitenschnecken 20 jeweils mit ihrem Endabschnitt, der mit einem Antriebsritzel 21 versehen ist, gelagert.

Zwischen benachbarten Antriebsritzeln 21 ist jeweils ein länglicher, axialer Abschnitt des Stützlagerelements 10 vorgesehen, in welchem ein rohrförmiger Umströmungskanal 13 ausgebildet ist. Der Umströmungskanal 13 erstreckt sich von einer Eingangsöffnung 12 am Konus 11 bis zu einer Ausgangsöffnung 14, die in axialer Erstreckung der Extruderschnecke 100 und in Fließrichtung gesehen jenseits der Antriebsritzel 21 mündet.

Figur 2 ist eine perspektivische Ansicht auf das Stützlagerelement 10. Dieses besitzt für jede Satellitenschnecke eine Nut 15, in welcher das Antriebsritzel gelagert wird, und eine Lagerausnehmung 16 vor Kopf, in die ein Lagerabsatz der Satellitenschnecke oder des Antriebsritzels einsetzbar ist, so dass ein Gleitlager ausgebildet wird. Die Schmierung der Gleitlager der Satellitenschnecken wie der Antriebsritzel erfolgt über das mit der Extruderschnecke geförderte Polymer. Da die Lagerausnehmungen 16 durch den Konus 11 von der Strömung abgeschirmt sind, sind zur Schmierung der Gleitlager radiale Bohrungen 17 vorgesehen, die sich jeweils vom Außenumfang bis in die Lagerausnehmung 16 erstrecken.

In Figur 2 ist außerdem ein trapezförmiger, nahezu dreieckiger Querschnitt der Umströmungskanäle 13 deutlich erkennbar. Dadurch, dass die Spitze der dreieckigen Querschnittsfläche zur Mittelachse weist und die breite Basis am Außenumfang liegt, wird der Platz zwischen den Antriebsritzeln optimal ausgenutzt. Die Ausgangsöffnungen 14 der Umströmungskanäle 13 befinden sich jeweils nicht am Ende des Stützlagerelements 10; vielmehr erstrecken sich die Umströmungskanäle 13 axial nur etwa so weit, wie die Antriebsritzel reichen.

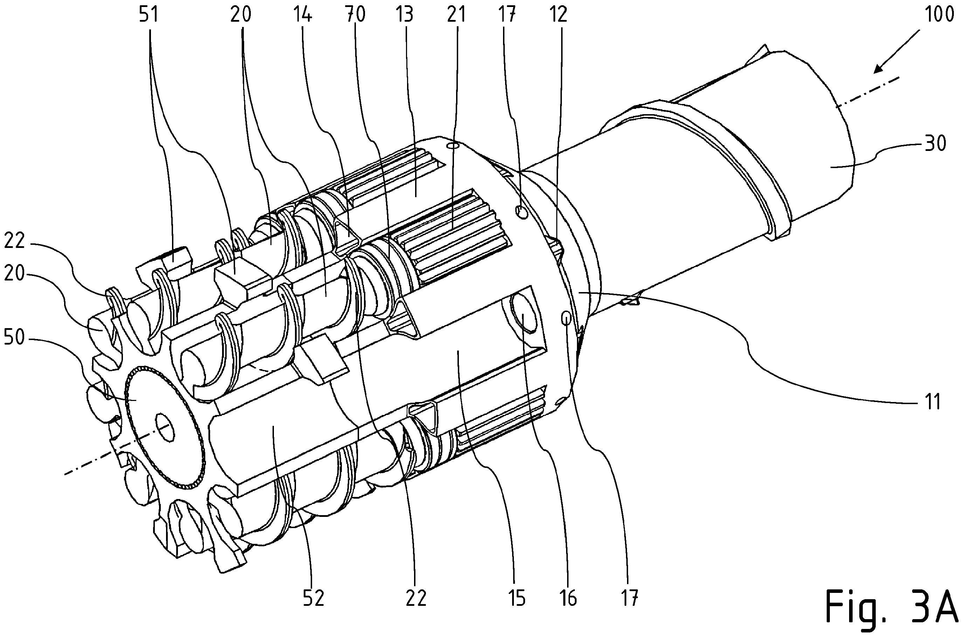

Der Vorteil dieser Anordnung ergibt sich aus Figur 3A. Dort ist die Extruderschnecke 100 mit ihrem Einzugs- und Meteringabschnitt 30, dem Stützlagerelement 10 und den Satellitenschnecken 20 perspektivisch dargestellt. Zusätzlich ist ein Teil eines Rotorkörpers 50 gezeigt, der sich an das Stützlagerelement 10 anschließt.

Die Nuten 15 des Stützlagerelements 10 setzen sich jeweils in Nuten 52 am Rotorkörper 50 fort. Die Satellitenschnecken 20 sind in den Nuten 15, 52 geführt, wobei sie mit der Außenseite offen liegen. Der Rotorkörper 50 besitzt zwischen den Nuten 52 jeweils Teile eines eigenen Hauptschneckenstegs 51. Dadurch, dass die Ausgangsöffnungen 14 der Umströmungskanäle 13 nicht bis zum Ende des Stützlagerelements 10 reichen, gelangt die aus der Ausgangsöffnung 14 herausquellende Schmelze direkt seitlich in den Einzugsbereich des Hauptschneckenstegs 51 und der Stege 22 an den Satellitenschnecken 20.

An einem rückwärtigen Lagerabsatz, der vor dem Bereich des Schneckensteges 22 endet, ist ein Gleitlagerelement 70 aufgesetzt, das am Außenumfang eine spiralförmige Rückstromsperre aufweist, um Schmelze in Richtung des Behandlungsraums, und damit weg von dem Antriebsritzel 21, zu fördern.

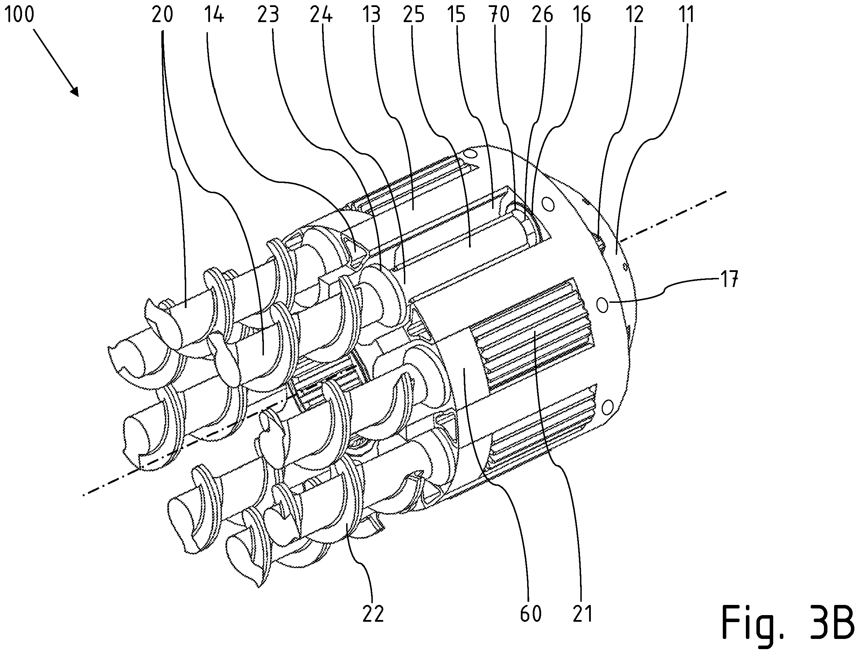

Figur 3B ist ähnlich zu Fig. 3A. Gegenüber der Darstellung in Figur 3A ist jedoch der Rotorkörper nicht dargestellt. Außerdem ist eines der Antriebsritzel 21 einer Satellitenschnecke 20 entfernt, um den Blick auf die Ausbildung der Satellitenschnecken 20 in deren Endbereich zu ermöglichen.

Der für die Polymerbearbeitung vorgesehene, lange Teil der Satellitenschnecken 20, der mit dem Schneckensteg 22 versehen ist, endet an einem Bund 23, dessen Durchmesser so groß ist, dass der daneben liegende Lagerabsatz weitgehend überdeckt ist. Damit wird im Betrieb eine zu starke Rückströmung aus dem Entgasungsraum des Extruders in den Bereich des Antriebsritzels 21 verhindert.

Die Gleitlagerelemente der Satellitenschnecken 20 sind jeweils in einem Lagereinsatzelement 60 aufgenommen, das in die Nut 15 des Stützlagerelements 10 eingesetzt ist. Hinter dem Absatz 24 für das Gleitlagerelement ist an allen Satellitenschnecken 20 jeweils ein Lagerabschnitt 25 ausgebildet, der das Antriebsritzel 21 aufnimmt.

Ganz am Ende der Satellitenschnecke 20 ist ein weiterer Lagerabsatz 26 ausgebildet, der entweder direkt in die Lagerausnehmung 16 im Stützelement 10 eingreift und mit der Lagerausnehmung ein Gleitlager ausbildet oder der in ein dort befindliches, gesondertes Gleitlagerelement eingreift.

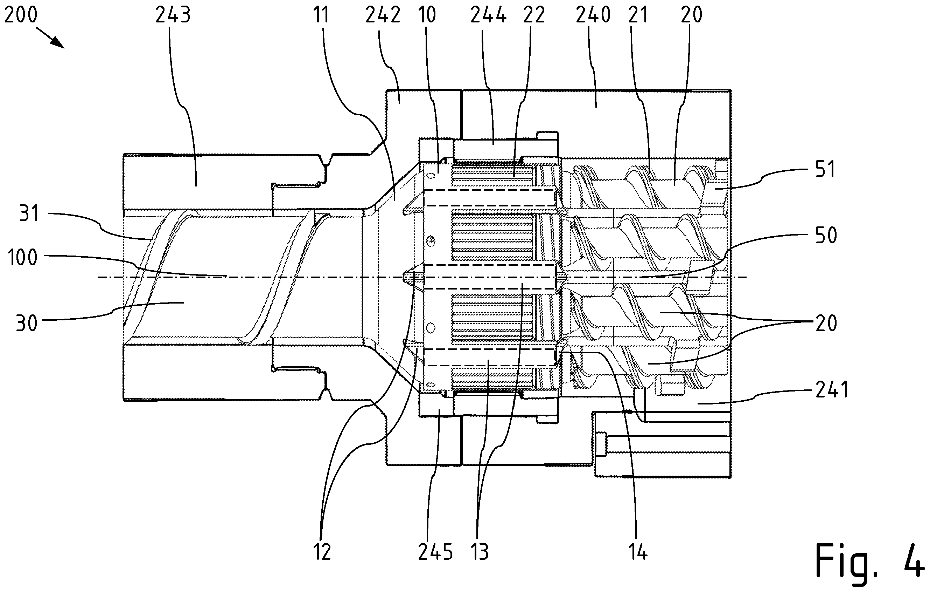

Fig. 4 zeigt Teile eines Mehrschneckenextruders 200 in seitlicher Schnittansicht. Dargestellt ist der gleiche Abschnitt der Extruderschneckenwelle 100 wie in Figur 3A. Die Extruderschneckenwelle 100 ist in einem Extrudergehäuse 240 mit einer Extruderbohrung 241 rotierbar gelagert.

Das Extrudergehäuse 240 besitzt ein Übergangsgehäuseteil 242 zur Aufnahme des Konus' 11 und ein Gehäuseteil 243 mit reduziertem Durchmesser zur Aufnahme des Einzugs- und Meteringabschnitts 30 der Extruderschnecke 100. In der Antriebszone ist ein Statorring 244 in die Extruderbohrung 241 eingesetzt, der eine Innenverzahnung besitzt, in die die Antriebsritzel 21 der Satellitenschnecken 20 eingreifen. Außerdem ist ein Stauring 245 eingesetzt, um den Ringspalt zwischen einer Innenwandung des Extrudergehäuses 240 und dem Außenumfang der Extruderschnecke 100 an dieser Stelle einstellen zu können.

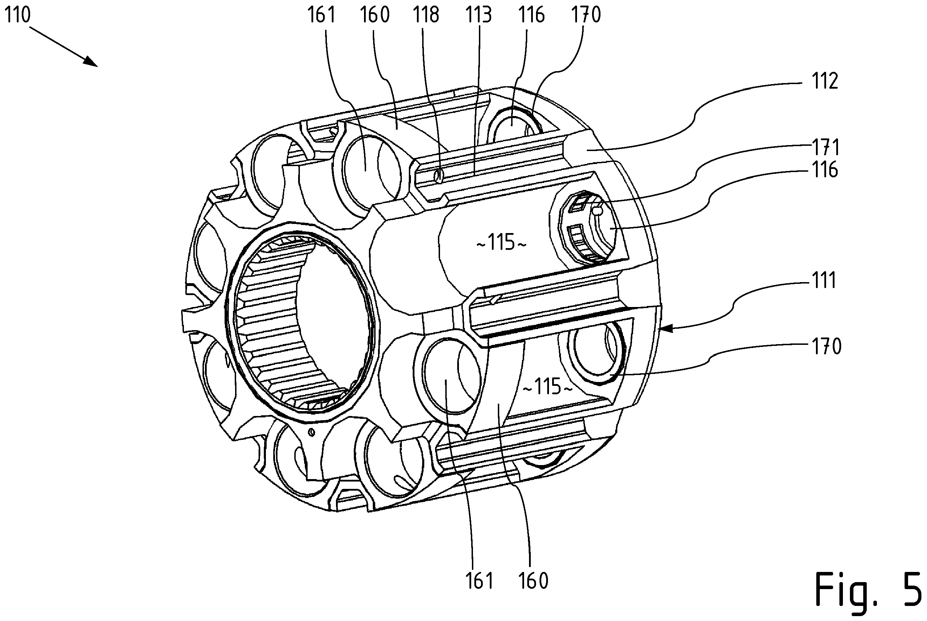

Figur 5 zeigt eine weitere Ausführungsform eines Stützlagerelements 110 mit Nuten 115 zur Aufnahme der Satellitenschnecken mit ihren Antriebsritzeln. An einem rückwärtigen Abschnitt, der als Konus 111 ausgebildet ist, sind Lagerausnehmungen 116 ausgebildet, worin pro Satellitenschnecke je ein Gleitlagerelement 170 mit einem Spannring 171 eingesetzt ist, welcher dazu dient, das Gleitlagerelement 170 im Stützlagerelement 110 zu halten. Wegen unterschiedlicher thermischer Ausdehnung kann sich die Passung zwischen dem Stützlagerelement 110 und dem Gleitlagerelement 170 ändern. Der Spannring 171 verhindert, dass sich das Gleitlagerelement 170 im Stützlagerelement 110 dreht.

Für die jeweilige zweite Lagerstelle ist ein Lagereinsatzelement 160 mit einer Lagerausnehmung 161 in die Nut 115 eingesetzt. Unterschiedlich im Vergleich zu der ersten Ausführungsform des Stützlagerelements 10 nach den Figuren 3A, 3B und 4 ist, dass beim Stützlagerelement 110 Umströmungskanäle 113 ausgebildet sind, die am Außenumfang offen sind. Von ihnen zweigt jeweils ein Kanal 118 ab, der in der Lagerausnehmung 161 des Lagereinsatzelements 160 mündet, um dort die Schmierung sicherzustellen.

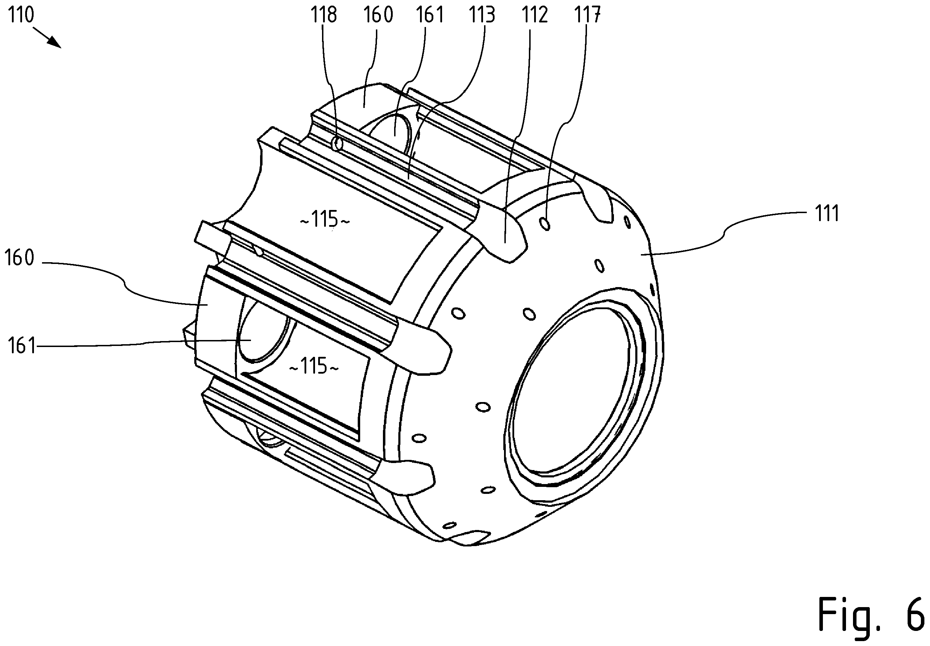

Figur 6 ist eine perspektivische Ansicht auf die Rückseite des Stützlagerelements 110. Hervorzuheben sind dort die Bohrungen 117, die jeweils zwischen zwei Eingangsöffnungen 112 der Umströmungskanäle 113 angeordnet sind und seitlich in den Lagerausnehmungen 116 (siehe Fig. 5) münden, um die dort angeordneten Gleitlager mit Polymer, das aus dem Produktionsfluss abgezweigt wird, zu schmieren.

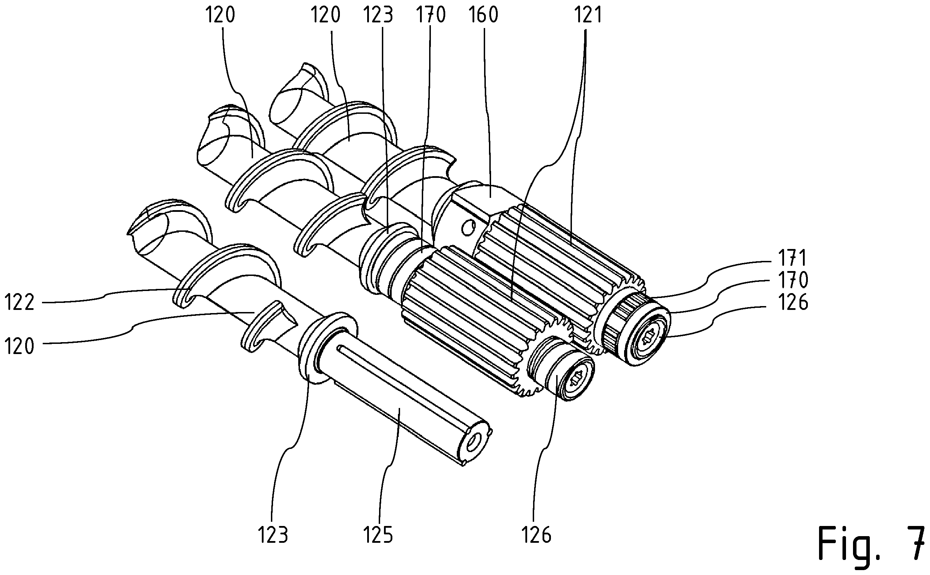

Figur 7 zeigt drei der Satellitenschnecken 120, die zur Aufnahme in dem in den Figuren 5 und 6 gezeigten Stützlagerelement 110 bestimmt sind.

Links ist eine Satellitenschnecke 120 mit Schneckensteg 122 ohne Zusatzteile gezeigt. Der Schneckensteg 122 endet an einem Bund 123. Dahinter ist ein Lagerabschnitt 125 ausgebildet.

Bei der mittleren Satellitenschnecke 120 ist ein Antriebsritzel 121 auf den Lagerabschnitt 125 aufgesetzt. Dieses umfasst nicht nur einen verzahnten Bereich, sondern an jeder Seite davon auch jeweils ein Gleitlagerelement 124, 126 mit außenumfänglichen Spiralnuten, die ein Rückfördergewinde ausbilden.

Bei der ganz rechts in Figur 7 dargestellten Satellitenschnecke 120 sind aufgesetzt:
- das Antriebsritzel 121;
- ein Lagereinsatzelement 160, das in Förderrichtung der Extruderschnecke vor dem Antriebsritzel 21 angeordnet ist und in das ein Gleitlagerelement 170 eingesetzt ist;
- ein Gleitlagerelement 170, in das der endseitige Lagerabsatz 126 der Satellitenschnecke 120 eingeführt ist; und
- einen das Gleitlagerelement 170 umgebenden Spannring 171.

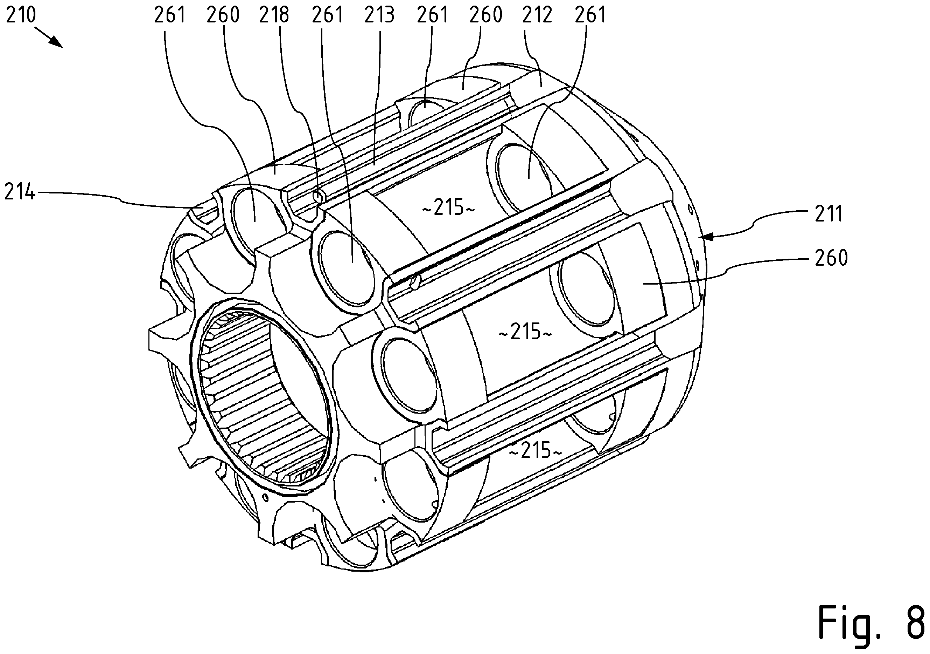

Figur 8 zeigt eine dritte Ausführungsform eines Stützlagerelements 210, das wiederum an seinem einen Ende einen Konus 211 aufweist und am Umfang eine Vielzahl hinterschnittener Nuten 215 besitzt, in denen die Antriebszone der Satellitenschnecken mit ihren Antriebsritzeln ausgebildet wird, wenn das Stützlagerelement 210 als Teil eine Extruderschneckenwelle eingebaut ist. Bei dem Stützlagerelement 210 sind die Lageraufnahmen 261 für die beiden Lagerstellen der Satellitenschnecken beidseits des jeweiligen Antriebsritzels in separaten Lagereinsatzelementen 260 vorgesehen.

Umströmungskanäle 213 erstrecken sich von Eingangsöffnungen 212 am Konus 211 zu Ausgangsöffnungen 214. Kanäle 218 zweigen vom Umströmungskanal 213 ab und reichen bis in die Lageraufnahmen 261 der Lagereinsatzelemente 260. Die Lagereinsatzelemente 260 sind auch bei dieser Ausführungsform mit ihrer Außenkontur an die Innenkontur der Nuten 215 so angepasst, dass sie in einer Ebene quer zur Mittelachse formschlüssig festgelegt sind, also nicht radial nach außen bewegt werden können. Die axiale Festlegung der Lagereinsatzelemente 260 erfolgt durch Absätze an den Satellitenschnecken.

### Bezuqszeichen:

- 200: Mehrschneckenextruder

- 100: Extruderschnecke

- 10; 110; 210: Stützlagerelement
- 11; 111; 211: Konus
- 12; 112; 212: Eingangsöffnung
- 13; 113; 213: Umströmungskanal
- 14; 214; 214: Ausgangsöffnung
- 15; 115; 215: Nut
- 16; 116; 216: Lagerausnehmung
- 17; 117; 217: Bohrung
- 118; 218: Kanal

- 20; 120: Satellitenschnecke
- 21; 121: Ritzel
- 22; 122: Schneckensteg
- 23; 123: Bund
- 24: Lagerabsatz
- 25; 125: Lagerabsatz zur Aufnahme des Antriebsritzels
- 26; 126: endseitiger Lagerabsatz

- 30: Einzugs- und Meteringabschnitt
- 31: Schneckensteg

- 240: Extrudergehäuse
- 241: Extruderbohrung
- 242: Übergangsgehäuseteil
- 243: Gehäuseteil
- 244: Statorring mit Innenverzahnung
- 245: Stauring

- 50: Rotorkörper
- 51: Hauptschneckensteg
- 52: Nut

- 70; 170: Gleitlagerelement

- 60; 160; 260: Lagereinsatzelement
- 161; 261: Lageraufnahmen

## Patentansprüche

1. Stützlagerelement (10; 110; 210) für eine Extruderschnecke (100) für einen Mehrschneckenextruder (200), wenigstens umfassend:
- einen Konus (11; 111; 211);
- mehrere am Außenumfang angeordnete, zur Rotationsachse des Stützlagerelements (10; 110; 210) achsparallele Nuten (15; 115; 215) zur Aufnahme je einer Satellitenschnecke (20) und eines damit verbundenen Antriebsritzels (21);
**dadurch gekennzeichnet, dass** in der Nut (15; 115; 215) wenigstens ein Gleitlager (70; 170; 270) zur Lagerung der Satellitenschnecke (20) neben ihrem Antriebsritzel (21) vorgesehen ist, wobei das Gleitlager (70; 170; 270) in einer am Stützlagerelement (10) ausgebildeten Lageraufnahme (16) angeordnet oder ausgebildet ist.

2. Stützlagerelement (10; 110; 210) nach Anspruch 1, **dadurch gekennzeichnet, dass** wenigstens ein Gleitlager (70; 170; 270) in einem lösbar in die Nut (15; 115; 215) eingesetzten Lagereinsatzelement (60; 160; 260) angeordnet ist.

3. Stützlagerelement (10; 110; 210) nach Anspruch 2, **dadurch gekennzeichnet, dass** die Nut (15; 115; 215) hinterschnitten ist und dass das Lagereinsatzelement (60; 160; 260) in einer Ebene quer zur Mittelachse der Extruderschnecke (100) formschlüssig in der Nut (15; 115; 215) zurückgehalten ist.

4. Stützlagerelement (10; 110; 210) nach wenigstens einem der vorhergehenden Ansprüche, **dadurch gekennzeichnet, dass** am Außenumfang des Stützlagerelements (10; 110; 210) für jedes Gleitlager (70; 170; 270) wenigstens eine Bohrung (17; 117; 217) eingebracht ist, die sich bis in die jeweilige Nut (15; 115; 215) für das Antriebsritzel (21) der Satellitenschnecke (20) oder bis in die Lageraufnahme (16; 116; 216) erstreckt.

5. Stützlagerelement (10; 110; 210) nach wenigstens einem der vorhergehenden Ansprüche, **dadurch gekennzeichnet, dass** zwischen wenigstens zwei benachbarten Nuten (15; 115; 215) ein Umströmungskanal (13; 113; 213) im Stützlagerelement (10; 110; 210) ausgebildet ist, der sich von einer Eingangsöffnung (12) am Konus (11; 111; 211) bis zu einer Ausgangsöffnung (14) erstreckt, die in Fließrichtung hinter der für die Antriebsritzel (21) vorgesehen Position angeordnet ist.

6. Extruderschnecke (100) für einen Mehrschneckenextruder (200), wenigstens umfassend:
- einen Einzugs- und Meteringabschnitt (30),
- einen im Durchmesser gegenüber dem Einzugs- und Meteringabschnitt (30) vergrößerten Rotorkörper (50),
- eine Mehrzahl von Satellitenschnecken (20), welche wenigstens einen Schneckensteg (22) aufweisen und zumindest über einen Teil Ihrer Länge offen liegend am Außenumfang des Rotorkörpers (50) angeordnet sind;
- eine Antriebszone am Rotorkörper (50), in welchem die Satellitenschnecken (20) jeweils ein Antriebsritzel (21) aufweisen, um in eine Innenverzahnung in oder an der Innenwandung eines Extrudergehäuses (240) des Mehrschneckenextruders (200) einzugreifen;
- einen Konus (11; 111; 211), der zwischen dem Einzugs- und Metering- abschnitt (30) und der Antriebszone am Rotorkörper (50) ausgebildet ist,
**dadurch gekennzeichnet, dass** der Rotorkörper (50) mit einem Stützlagerelement (10; 110; 210) nach einem der vorhergehenden Ansprüche verbunden ist, an welchem der Konus (11; 111; 211) ausgebildet ist und dass die Satellitenschnecken (20) jeweils in wenigstens einem neben dem Antriebsritzel (21) angeordneten Gleitlager (70; 170; 270) im Stützlagerelement (10; 110; 210) gelagert sind.

7. Extruderschnecke (100) nach Anspruch 6, **dadurch gekennzeichnet, dass** die Satellitenschnecken (20) jeweils einen endseitigen Lagerabsatz (26) aufweisen, der in einem Gleitlager (70; 170; 270) in einer Lageraufnahme (16; 116; 216) im Stützlagerelement (10; 110; 210) oder im Rotorkörper (50) in einem darin eingesetzten Lagereinsatzelement (60; 160; 260) gelagert ist.

8. Extruderschnecke (100) nach Anspruch 7, **dadurch gekennzeichnet, dass** das Gleitlager (70; 170; 270) für den endseitigen Lagerabsatz (26) der Satellitenschnecken (20) jeweils in einer Lageraufnahme (16; 116; 216) im Stützlagerelement (10; 110; 210) angeordnet ist, welche neben dem Konus (11; 111; 211) angeordnet ist.

9. Extruderschnecke (100) nach einem der Ansprüche 7 bis 8, **dadurch gekennzeichnet, dass** die Satellitenschnecken (20) jeweils in wenigstens einem Gleitlager (70; 170; 270) gelagert sind, das an einer axialen Position zwischen dem Antriebsritzel (21) und dem Beginn des Schneckenstegs (22) angeordnet ist.

10. Mehrschneckenextruder (200), wenigstens umfassend:
- ein Extrudergehäuse (240) mit einer Extruderbohrung (241) und
- eine Extruderschnecke (100; 100'; 100") nach einem der vorhergehenden Ansprüche 7 bis 9, die rotierbar in der Extruderbohrung (241) gelagert ist und deren Antriebsritzel (21) in eine Außenverzahnung am Rotorkörperabschnitt (50) der Extruderschnecke (100) oder in eine Innenverzahnung in einem Statorring (244) oder in der Innenwandung des Gehäuses (240) eingreifen.

11. Mehrschneckenextruder (200) nach Anspruch 10, **dadurch gekennzeichnet, dass** in einer Antriebszone, in welchem die Antriebsritzel (21) in den Nuten (15; 115; 215) angeordnet sind:
- im Stützlagerelement (10; 110; 210) wenigstens ein Umströmungskanal (13; 113; 213) zwischen zwei benachbarten Nuten (15; 115; 215) ausgebildet ist
- oder in einer Gehäusewandung des Extrudergehäuses (240) wenigstens ein Umströmungskanal ausgebildet ist, der sich in Längsrichtung gesehen von einer vor der Position der Antriebsritzel (21) angeordneten Eingangsöffnung bis zu einer jenseits der Antriebsritzel (21) angeordneten Ausgangsöffnung erstreckt.

12. Mehrschneckenextruder (200) nach Anspruch 11, **dadurch gekennzeichnet, dass** die Umströmungskanäle umfänglich geschlossen und rohrförmig ausgebildet sind.

13. Mehrschneckenextruder (200) nach Anspruch 11, **dadurch gekennzeichnet, dass** die Umströmungskanäle umfänglich offen ausgebildet sind.

14. Mehrschneckenextruder (200) nach Anspruch 11 bis 13, **dadurch gekennzeichnet, dass** die Umströmungskanäle in einem Statorring (244) und/oder in einem Stauring (245) ausgebildet sind, der in der Antriebszone in die Extruderbohrung (241) eingesetzt ist.

## Claims

1. Support bearing element (10; 110; 210) for an extruder screw (100) for a multi-screw extruder (200), at least comprising:
- a cone (11; 111; 211);
- a plurality of grooves (15; 115; 215), which are disposed on the external circumference and are axially parallel to the rotation axis of the support bearing element (10; 110; 210), for receiving in each case one satellite screw (20) and a drive pinion (21) connected thereto;
**characterized in that** provided in the groove (15; 115; 215) is at least one friction bearing (70; 170; 270) for mounting the satellite screw (20) next to the drive pinion (21) of the latter, wherein the friction bearing (70; 170; 270) is disposed or configured in a bearing receptacle (16) configured on the support bearing element (10).

2. Support bearing element (10; 110; 210) according to Claim 1, **characterized in that** at least one friction bearing (70; 170; 270) is disposed in a bearing insert element (60; 160; 260) which is releasably inserted into the groove (15; 115; 215).

3. Support bearing element (10; 110; 210) according to Claim 2, **characterized in that** the groove (15; 115; 215) is undercut, and **in that** the bearing insert element (60; 160; 260) is retained in the groove (15; 115; 215) in a form-fitting manner in a plane transverse to the central axis of the extruder screw (100) .

4. Support bearing element (10; 110; 210) according to at least one of the preceding claims, **characterized in that** at least one bore (17; 117; 217) for each friction bearing (70; 170; 270) is incorporated on the external circumference of the support bearing element (10; 110; 210), said bore (17; 117; 217) extending into the respective groove (15; 115; 215) for the drive pinion (21) of the satellite screw (20), or into the bearing receptacle (16; 116; 216).

5. Support bearing element (10; 110; 210) according to at least one of the preceding claims, **characterized in that** configured between at least two adjacent grooves (15; 115; 215) in the support bearing element (10; 110; 210) is a circulation flow duct (13; 113; 213) which extends from an entry opening (12) on the cone (11; 111; 211) to an exit opening (14) that in the flow direction is disposed behind the position provided for the drive pinions (21).

6. Extruder screw (100) for a multi-screw extruder (200), at least comprising:
- an intake and metering portion (30);
- a rotor body (50) which in terms of the diameter is enlarged in comparison to the intake and metering portion (30);
- a plurality of satellite screws (20) which have at least one screw web (22) and are disposed on the external circumference of the rotor body (50) so as to lie open on the latter over at least part of their length;
- a drive zone on the rotor body (50), in which the satellite screws (20) have in each case one drive pinion (21) so as to engage in an internal toothing in or on the internal wall of an extruder housing (240) of the multi-screw extruder (200);
- a cone (11; 111; 211) which is configured between the intake and metering portion (30) and the drive zone on the rotor body (50),
**characterized in that** the rotor body (50) is connected to a support bearing element (10; 110; 210) according to one of the preceding claims on which the cone (11; 111; 211) is configured, and **in that** the satellite screws (20) are in each case mounted in the support bearing element (10; 110; 210) in at least one friction bearing (70; 170; 270) disposed next to the drive pinion (21).

7. Extruder screw (100) according to Claim 6, **characterized in that** the satellite screws (20) have in each case one end-proximal bearing shoulder (26) which is mounted in a friction bearing (70; 170; 270) in a bearing receptacle (16; 116; 216) in the support bearing element (10; 110; 210) or in the rotor body (50) so as to be in a bearing insert element (60; 160; 260) inserted into said bearing receptacle (16; 116; 216).

8. Extruder screw (100) according to Claim 7, **characterized in that** the friction bearing (70; 170; 270) for the end-proximal bearing shoulder (26) of the satellite screw (20) is in each case disposed in a bearing receptacle (16; 116; 216) which is disposed next to the cone (11; 111; 211) in the support bearing element (10; 110; 210).

9. Extruder screw (100) according to one of Claims 7 to 8, **characterized in that** the satellite screws (20) are in each case mounted in at least one friction bearing (70; 170; 270) which is disposed at an axial position between the drive pinion (21) and the beginning of the screw web (22).

10. Multi-screw extruder (200), at least comprising:
- an extruder housing (240) having an extruder bore (241) and
- an extruder screw (100; 100'; 100'') according to one of preceding Claims 7 to 9 which is rotatably mounted in the extruder bore (241), and the drive pinions (21) of which engage in an external toothing on the rotor body portion (50) of the extruder screw (100), or in an internal toothing in a stator ring (244), or in the internal wall of the housing (240).

11. Multi-screw extruder (200) according to Claim 10, **characterized in that** in a drive zone in which the drive pinions (21) are disposed in the grooves (15; 115; 215):
- configured between two adjacent grooves (15; 115; 215) in the support bearing element (10; 110; 210) is at least one circulation flow duct (13; 113; 213); or
- configured in a housing wall of the extruder housing (240) is at least one circulation flow duct which, when viewed in the longitudinal direction, extends from an entry opening, which is disposed in front of the position of the drive pinions (21), to an exit opening disposed beyond the drive pinions (21).

12. Multi-screw extruder (200) according to Claim 11, **characterized in that** the circulation flow ducts are configured to be circumferentially closed and tubular.

13. Multi-screw extruder (200) according to Claim 11, characterized that the circulation flow ducts are configured to be circumferentially open.

14. Multi-screw extruder (200) according to Claims 11 to 13, characterized that the circulation flow ducts are configured in a stator ring (244) and/or in a restrictor ring (245) which is inserted into the extruder bore (241) in the drive zone.

## Revendications

1. Élément de palier de support (10 ; 110 ; 210) pour une vis d'extrudeuse (100) pour une extrudeuse multi-vis (200), comprenant au moins :
- un cône (11 ; 111 ; 211) ;
- plusieurs rainures (15 ; 115 ; 215) agencées sur la périphérie extérieure, en parallélisme axial avec l'axe de rotation de l'élément de palier de support (10 ; 110 ; 210), pour recevoir chacune une vis satellite (20) et un pignon d'entraînement (21) relié à celle-ci ;
**caractérisé en ce qu'**il est prévu dans la rainure (15 ; 115 ; 215) au moins un palier lisse (70 ; 170 ; 270) pour le montage de la vis satellite (20) à côté de son pignon d'entraînement (21), le palier lisse (70 ; 170 ; 270) étant agencé ou réalisé dans un logement de palier (16) réalisé sur l'élément de palier de support (10).

2. Élément de palier de support (10 ; 110 ; 210) selon la revendication 1, **caractérisé en ce qu'**au moins un palier lisse (70 ; 170 ; 270) est agencé dans un élément d'insertion de palier (60 ; 160 ; 260) inséré de manière amovible dans la rainure (15 ; 115 ; 215).

3. Élément de palier de support (10 ; 110 ; 210) selon la revendication 2, **caractérisé en ce que** la rainure (15 ; 115 ; 215) est contre-dépouillée et **en ce que** l'élément d'insertion de palier (60 ; 160 ; 260) est retenu dans la rainure (15 ; 115 ; 215) par complémentarité de forme dans un plan transversal à l'axe central de la vis d'extrudeuse (100).

4. Élément de palier de support (10 ; 110 ; 210) selon au moins l'une quelconque des revendications précédentes, **caractérisé en ce que** sur la périphérie extérieure de l'élément de palier de support (10 ; 110 ; 210) est ménagé pour chaque palier lisse (70 ; 170 ; 270) au moins un alésage (17 ; 117 ; 217) qui s'étend jusque dans la rainure respective (15 ; 115 ; 215) pour le pignon d'entraînement (21) de la vis satellite (20) ou jusque dans le logement de palier (16 ; 116 ; 216).

5. Élément de palier de support (10 ; 110 ; 210) selon au moins l'une quelconque des revendications précédentes, **caractérisé en ce qu'**un canal de circulation (13 ; 113 ; 213) est réalisé dans l'élément de palier de support (10 ; 110 ; 210) entre au moins deux rainures voisines (15 ; 115 ; 215), lequel s'étend d'une ouverture d'entrée (12) sur le cône (11 ; 111 ; 211) jusqu'à une ouverture de sortie (14) qui est agencée dans la direction d'écoulement derrière la position prévue pour le pignon d'entraînement (21).

6. Vis d'extrudeuse (100) pour une extrudeuse multi-vis (200), comprenant au moins :
- une section d'alimentation et de comptage (30),
- un corps de rotor (50) dont le diamètre est plus grand que celui de la section d'alimentation et de comptage (30),
- une pluralité de vis satellites (20) qui présentent au moins une âme de vis (22) et qui sont agencées en reposant sous forme ouverte sur la périphérie extérieure du corps de rotor (50) sur au moins une partie de leur longueur ;
- une zone d'entraînement sur le corps de rotor (50), dans laquelle les vis satellites (20) présentent chacune un pignon d'entraînement (21) destiné à s'engager dans une denture intérieure dans ou sur la paroi intérieure d'un carter d'extrudeuse (240) de l'extrudeuse multi-vis (200) ;
- un cône (11 ; 111 ; 211) réalisé entre la section d'alimentation et de mesure (30) et la zone d'entraînement sur le corps de rotor (50) ;
**caractérisé en ce que** le corps de rotor (50) est relié à un élément de palier de support (10 ; 110 ; 210) selon l'une quelconque des revendications précédentes, sur lequel est réalisé le cône (11 ; 111 ; 211), et **en ce que** les vis satellites (20) sont montées respectivement dans au moins un palier lisse (70 ; 170 ; 270) agencé à côté du pignon d'entraînement (21) dans l'élément de palier de support (10 ; 110 ; 210).

7. Vis d'extrudeuse (100) selon la revendication 6, **caractérisée en ce que** les vis satellites (20) présentent respectivement un épaulement de palier (26) côté extrémité, qui est monté dans un palier lisse (70 ; 170 ; 270) dans un logement de palier (16 ; 116 ; 216) dans l'élément de palier de support (10 ; 110 ; 210) ou dans le corps de rotor (50) dans un élément d'insertion de palier (60 ; 160 ; 260) inséré dans celui-ci.

8. Vis d'extrudeuse (100) selon la revendication 7, **caractérisée en ce que** le palier lisse (70 ; 170 ; 270) pour l'épaulement de palier (26) côté extrémité des vis satellites (20) est agencé respectivement dans un logement de palier (16 ; 116 ; 216) dans l'élément de palier de support (10 ; 110 ; 210), lequel est agencé à côté du cône (11 ; 111 ; 211).

9. Vis d'extrusion (100) selon l'une quelconque des revendications 7 à 8, **caractérisée en ce que** les vis satellites (20) sont respectivement montées dans au moins un palier lisse (70 ; 170 ; 270) qui est agencé dans une position axiale entre le pignon d'entraînement (21) et le début de l'âme de vis (22).

10. Extrudeuse multi-vis (200), comprenant au moins :
- un carter d'extrudeuse (240) avec un alésage d'extrudeuse (241) et
- une vis d'extrudeuse (100 ; 100' ; 100") selon l'une quelconque des revendications 7 à 9 précédentes, qui est montée de manière rotative dans l'alésage d'extrudeuse (241) et dont le pignon d'entraînement (21) s'engage dans une denture extérieure sur la section de corps de rotor (50) de la vis d'extrudeuse (100) ou dans une denture intérieure dans une bague de stator (244) ou dans la paroi intérieure du carter (240).

11. Extrudeuse multi-vis (200) selon la revendication 10, **caractérisée en ce que**, dans une zone d'entraînement dans laquelle les pignons d'entraînement (21) sont agencés dans les rainures (15 ; 115 ; 215) :
- dans l'élément de palier de support (10 ; 110 ; 210), au moins un canal de circulation (13 ; 113 ; 213) est réalisé entre deux rainures voisines (15 ; 115 ; 215)
- ou, dans une paroi de carter du carter de l'extrudeuse (240), au moins un canal de circulation est réalisé qui, vu dans la direction longitudinale, s'étend d'une ouverture d'entrée agencée avant la position des pignons d'entraînement (21) jusqu'à une ouverture de sortie agencée au-delà des pignons d'entraînement (21).

12. Extrudeuse multi-vis (200) selon la revendication 11, **caractérisé en ce que** les canaux de circulation sont fermés sur la périphérie et sont réalisés sous forme tubulaire.

13. Extrudeuse multi-vis (200) selon la revendication 11, **caractérisé en ce que** les canaux de circulation sont réalisés sous forme ouverte sur la périphérie.

14. Extrudeuse multi-vis (200) selon les revendications 11 à 13, **caractérisé en ce que** les canaux de circulation sont réalisés dans une bague de stator (244) et/ou dans une bague de retenue (245) qui est insérée dans la zone d'entraînement dans l'alésage d'extrudeuse (241).
